# EUROPEAN PATENT APPLICATION

(11) **EP 2 836 000 A1**
(43) Date of publication of application: **11.02.2015**
(21) Application number: 12884590.6
(22) Date of filing: 12.09.2012
(51) Int. Cl.: H04W 12/08

(54) **COMMUNICATION METHOD, DEVICE AND SYSTEM IN MOBILE BACKHAUL NETWORK**

(71) Applicant: Huawei Technologies Co., Ltd., Shenzhen, Guangdong 518129 (CN)
(72) Inventor: LIU, Lifeng, Shenzhen Guangdong 518129 (CN); MENG, Jian, Shenzhen Guangdong 518129 (CN); WANG, Yuchen, Shenzhen Guangdong 518129 (CN)
(74) Representative: Thun, Clemens
(86) International application number: PCT/CN2012/081268
(87) International publication number: WO 2014/040235

(57) **Abstract**

A communications method, device, and system in a mobile backhaul transport network are used to resolve a problem in the prior art that communication security in a backhaul transport network cannot be ensured in an LTE scenario. The method includes: sending, by a first network node, a request message to a control server in the mobile backhaul transport network, where the request message is used to request security information of a second network node in the mobile backhaul transport network; receiving, by the first network node, the security information of the second network node, which is returned by the control server; establishing, by the first network node, a secure tunnel with the second network node according to the security information of the second network node to perform communication. This enables two network nodes in a mobile backhaul transport network to perform secure communication and ensures security of communication between network nodes.

## Description

### TECHNICAL FIELD

The present invention relates to the field of computer and communications technologies, and in particular, to a communications method and device in a mobile backhaul transport network, and a communications system in the mobile backhaul transport network.

### BACKGROUND

With development of Internet technologies, a mobile broadband technology has become a reality. The mobile broadband technology refers to a technology that allows people to access the Internet at a high speed by using a mobile communications network. This technology changes people's habits of using the Internet. People may access the Internet by using a mobile communications network anywhere anytime and are not limited to accessing the Internet through a fixed network interface in an office or a domicile. It can be foreseen that a development speed of a mobile broadband service will far exceed that of a fixed broadband service in the near future.

With updating of mobile communications technologies, Long Term Evolution (Long Term Evolution, LTE for short) has become a development direction in the future and a common choice of global operators. LTE is a full packet-base mobile communications system with a high data transmission rate and a low delay. Compared with communication that is performed between various network nodes in a mobile backhaul transport network by using an asynchronous transfer mode (Asynchronous Transfer Mode, ATM for short) in 2G and 3G eras, communication that is performed between various base stations and between a base station and a core network device in a mobile backhaul transport network by using the Internet Protocol (Internet Protocol, IP for short) in an LTE era on one hand has advantages such as openness and a high speed, and also causes a security risk due to openness of an IP network on the other hand. For example, a malicious user may acquire traffic between a base station and a core network device and between various base stations by using a mirroring technology, thereby acquiring confidential data, which is carried in the traffic, of a user by means of traffic parsing; tamper data in traffic of a target user and send tampered traffic back to a network; or the like.

During the process of implementing the present invention, the inventor finds that the prior art has at least the following problem: In an LTE scenario, security of communication between various network nodes in a mobile backhaul transport network cannot be ensured.

### SUMMARY

Embodiments of the present invention provide a communications method in a mobile backhaul transport network and a communications system in the mobile backhaul transport network, to resolve a problem in the prior art that communication security in a backhaul transport network cannot be ensured in an LTE scenario.

Correspondingly, the embodiments of the present invention further provide a network node in the mobile backhaul transport network and a control server in the mobile backhaul transport network.

According to a first aspect, a communications method in a mobile backhaul transport network is provided and includes:
sending, by a first network node, a request message to a control server in the mobile backhaul transport network, where the request message is used to request security information of a second network node in the mobile backhaul transport network;
receiving, by the first network node, the security information of the second network node, which is returned by the control server; and
establishing, by the first network node, a secure tunnel with the second network node according to the security information of the second network node to perform communication.

In a first possible implementation manner of the first aspect, the communications method further includes:
reporting, by the first network node, security information of the first network node to the control server, where the security information of the first network node is used to enable the second network node to establish, after acquiring the security information, the secure tunnel with the first network node.

In the first aspect or the first possible implementation manner of the first aspect, a second possible implementation manner of the first aspect is further provided, where before the sending, by a first network node, a request message to a control server in the mobile backhaul transport network, the communications method further includes:
establishing, by the first network node, a bidirectional connection channel with the control server after the first network node is authenticated by the control server; and
sending, by the first network node, a keepalive message to the control server through the bidirectional connection channel, to confirm whether the control server is in a survival state.

In the first aspect, the first possible implementation manner of the first aspect, or the second possible implementation manner of the first aspect, the security information of the second network node includes at least one of the following: an IP address, an identifier of a port providing a service, a supported tunnel type, a tunnel authentication manner, and a public key certificate.

In the first aspect and the first to third possible implementation manners of the first aspect, the first network node includes at least one of the following: a base station and a core network device; and the second network node includes at least one of the following: a base station and a core network device.

According to a second aspect, a communications method in a mobile backhaul transport network is provided and includes:
receiving, by a control server, a request message sent by a first network node in the mobile backhaul transport network, where the request message is used to request security information of a second network node in the mobile backhaul transport network; and
providing, by the control server, the security information of the second network node for the first network node, so that the first network node establishes a secure tunnel with the second network node according to the security information of the second network node to perform communication.

In a first possible implementation manner of the second aspect, the providing, by the control server, the security information of the second network node for the first network node includes:
when it is confirmed that the first network node has permission to communicate with the second network node, searching, by the control server, stored security information of network nodes for the security information of the second network node, and returning the security information of the second network node to the first network node.

In the first possible implementation manner of the second aspect, a second possible implementation manner of the second aspect is further provided, where before the searching, by the control server, stored security information of network nodes to acquire the security information of the second network node, the communications method further includes:
receiving and storing, by the control server, the security information of the second network node, which is reported by the second network node.

In a third possible implementation manner of the second aspect, the providing, by the control server, the security information of the second network node for the first network node includes: forwarding, by the control server when it is confirmed that the first network node has permission to communicate with the second network node, the request message to the second network node;
receiving, by the control server, the security information of the second network node, which is returned by the second network node; and
returning, by the control server, the security information of the second network node to the first second network node.

In the second aspect, the first possible implementation manner of the second aspect, the second possible implementation manner of the second aspect, or the third possible implementation manner of the second aspect, a fourth possible implementation manner of the second aspect is further provided, where the communications method further includes:
receiving, by the control server, security information of the first network node, which is reported by the first network node, where the security information of the first network node is used to enable the second network node to establish, after acquiring the security information, the secure tunnel with the first network node.

In the second aspect, the first possible implementation manner of the second aspect, the second possible implementation manner of the second aspect, the third possible implementation manner of the second aspect, or the fourth possible implementation manner of the second aspect, a fifth possible implementation manner of the second aspect is further provided, where before the receiving, by a control server, a request message sent by a first network node in the mobile backhaul transport network, the communications method further includes:
establishing, after the control server authenticates the first network node, a bidirectional connection channel with the first network node; and
sending, by the control server, a keepalive message to the first network node through the bidirectional connection channel, to confirm whether the first network node is in a survival state.

According to a third aspect, a network node is provided. The network node is applied to a mobile backhaul transport network and includes:
a sending unit, configured to send a request message to a control server in the mobile backhaul transport network, where the request message is used to request security information of another network node in the mobile backhaul transport network;
a receiving unit, configured to receive the security information of the another network node, which is correspondingly returned by the control server according to the request message sent by the sending unit; and
a communicating unit, configured to establish a secure tunnel with the another network node according to the security information of the another network node, which is received by the receiving unit, to perform communication.

In a first possible implementation manner of the third aspect, the network node further includes:
a reporting unit, configured to report security information of the network node to the control server, where the security information of the network node is used to enable the another network node to establish, after acquiring the security information, the secure tunnel with the network node.

In the third aspect or the first possible implementation manner of the third aspect, a second possible implementation manner of the third aspect is provided, where the network node further includes:
an establishing unit, configured to: after the network node is authenticated by the control server, establish a bidirectional connection channel with the control server; and
a confirming unit, configured to receive, through the bidirectional connection channel, a keepalive message periodically sent by the control server, to confirm whether the control server is in a survival state, where
if the confirming unit confirms that the control server is in the survival state, the sending unit sends the request message.

According to a fourth aspect, a control server is further provided. The control server is applied to a mobile backhaul transport network and includes:
a receiving unit, configured to receive a request message sent by a first network node in the mobile backhaul transport network, where the request message is used to request security information of a second network node in the mobile backhaul transport network; and
a providing unit, configured to provide the security information of the second network node for the first network node according to the request message, so that the first network node establishes a secure tunnel with the second network node according to the security information of the second network node to perform communication.

In a first possible implementation manner of the fourth aspect, the providing unit includes:
an authenticating subunit, configured to confirm whether the first network node has permission to communicate with the second network node;
a searching subunit, configured to: when the authenticating subunit confirms that the first network node has the permission to communicate with the second network node, search stored security information of network nodes for the security information of the second network node; and
a sending subunit, configured to return the security information of the second network node, which is acquired by the searching subunit, to the first network node.

In a second possible implementation manner of the fourth aspect, the providing unit includes:
an authenticating subunit, configured to confirm whether the first network node has permission to communicate with the second network node; and
a forwarding subunit, configured to: when the authenticating subunit confirms that the first network node has the permission to communicate with the second network node, forward the request message to the second network node; receive the security information of the second network node, which is returned by the second network node, and return the security information of the second network node to the first network node.

In the fourth aspect, the first possible implementation manner of the fourth aspect, or the second possible implementation manner of the fourth aspect, a third possible implementation manner of the fourth aspect is further provided, where the control server further includes:
an establishing unit, configured to: after the first network node is authenticated, establish a bidirectional connection channel with the first network node; and
a confirming unit, configured to send a keepalive message to the first network node through the bidirectional connection channel established by the establishing unit, to confirm whether the first network node is in a survival state, where
if the confirming unit confirms that the first network node is in the survival state, the providing unit is configured to provide the security information of the second network node for the first network node.

According to a fifth aspect, a network node is provided. The network node is applied to a mobile backhaul transport network and includes a memory and a processor, where:
the memory is configured to store code; and
the processor is configured to read the code stored in the memory and execute the communications method in the first aspect or any one of the possible implementation manners of the first aspect.

According to a sixth aspect, a control server is provided. The control server is applied to a mobile backhaul transport network and includes a memory and a processor, where:
the memory is configured to store code; and
the processor is configured to read the code stored in the memory and execute the communications method in the second aspect or any one of the possible implementation manners of the second aspect.

According to a seventh aspect, a communications system in a mobile backhaul transport network is provided, and includes at least two network nodes in the fifth aspect and at least one control server in the sixth aspect.

In the embodiments of the present invention, a control server is added in a mobile backhaul transport network. A first network node in the mobile backhaul transport network sends a request message to the control server in the mobile backhaul transport network and acquires security information of a second network node, which is returned by the control server, to establish a secure tunnel with the second network node according to the security information of the second network node to perform communication, which ensures security of communication between various network nodes.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of an application scenario of a communications method in a mobile backhaul transport network according to Embodiment 1 of the present invention;
FIG. 2 is a first flowchart of a communications method in a mobile backhaul transport network according to Embodiment 1 of the present invention;
FIG. 3a is a flowchart of a first implementation manner of establishing a secure tunnel between a first network node and a second network node in a first flowchart according to Embodiment 1 of the present invention;
FIG. 3b is a flowchart of a second implementation manner of establishing a secure tunnel between a first network node and a second network node in a first flowchart according to Embodiment 1 of the present invention;
FIG. 3c is a flowchart of a third implementation manner of establishing a secure tunnel between a first network node and a second network node in a first flowchart according to Embodiment 1 of the present invention;
FIG. 4 is a second flowchart of a communications method in a mobile backhaul transport network according to Embodiment 1 of the present invention;
FIG. 5 is a third flowchart of a communications method in a mobile backhaul transport network according to Embodiment 1 of the present invention;
FIG. 6a is a flowchart of a first implementation manner of providing security information of a second network node for a first network node in a third flowchart according to Embodiment 1 of the present invention;
FIG. 6b is a flowchart of a second implementation manner of providing security information of a second network node for a first network node in a third flowchart according to Embodiment 1 of the present invention;
FIG. 6c is a flowchart of a third implementation manner of providing security information of a second network node for a first network node in a third flowchart according to Embodiment 1 of the present invention;
FIG. 6d is a schematic diagram of a format of a message exchanged between a network node and a control server according to Embodiment 1 of the present invention;
FIG. 6e is an example of a message exchanged between a network node and a control server according to Embodiment 1 of the present invention;
FIG. 7 is a fourth flowchart of a communications method in a mobile backhaul transport network according to Embodiment 1 of the present invention;
FIG. 8a is a first schematic structural diagram of a network node according to Embodiment 2 of the present invention;
FIG. 8b is a second schematic structural diagram of a network node according to Embodiment 2 of the present invention;
FIG. 9a is a first schematic structural diagram of a control server according to Embodiment 2 of the present invention;
FIG. 9b is a second schematic structural diagram of a control server according to Embodiment 2 of the present invention;
FIG. 9c is a third schematic structural diagram of a control server according to Embodiment 2 of the present invention;
FIG. 9d is a fourth schematic structural diagram of a control server according to Embodiment 2 of the present invention;
FIG. 10 is a schematic constructional diagram of a network node according to an embodiment of the present invention; and
FIG. 11 is a schematic constructional diagram of a control server according to an embodiment of the present invention.

### DESCRIPTION OF EMBODIMENTS

The following describes main implementation principles, specific implementation manners, and corresponding beneficial effects of the technical solutions in the embodiments of the present invention in detail with reference to the accompanying drawings.

### Embodiment 1

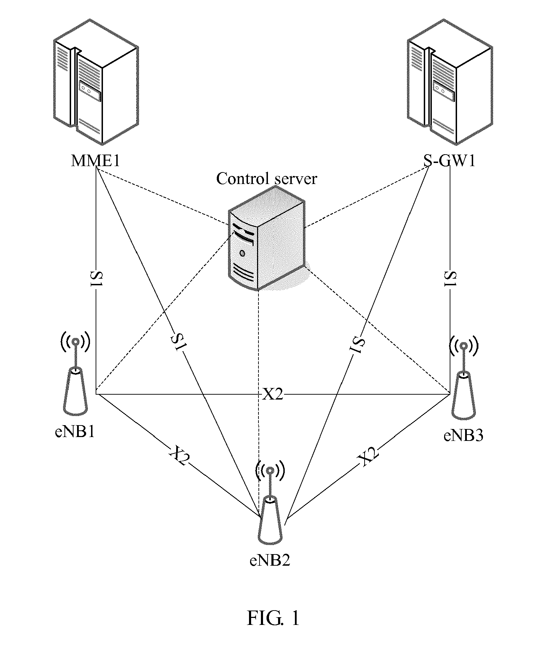

FIG. 1 is a schematic diagram of an application scenario of a communications method in a mobile backhaul transport network according to this embodiment of the present invention.

The mobile backhaul transport network is also called a mobile backhaul network and is an important part for implementing a mobile broadband technology. In an LTE scenario, the mobile backhaul transport network specifically refers to a network between a base station (eNodeB or eNB) and a core network device and between base stations. The core network device includes a mobility management entity (Mobility Management Entity, MME for short), a serving gateway (Serving GW, S-GW for short), or the like. The core network device varies with a networking scenario. This embodiment uses only the MME and the S-GW as examples for description. Traffic of data transmitted in the mobile backhaul transport network includes traffic of an S 1 interface between the eNB and the core network device and traffic of an X2 interface between two eNBs.

This embodiment uses an LTE network as an example for description, but the present invention poses no limitation thereon.

In this embodiment, a control server is added in the mobile backhaul transport network. This control server may communicate with each eNB and each core network device. In this embodiment of the present invention, the base station or the core network device may also be called a network node. This control server is configured to: when a first network node in the mobile backhaul transport network needs to communicate with a second network node, provide security information of the second network node for the first network node, so that the first network node may establish a secure tunnel with the second network node according to the security information of the second network node to perform communication. Therefore, a secure communication connection may be dynamically established between two network nodes in the mobile backhaul transport network as required.

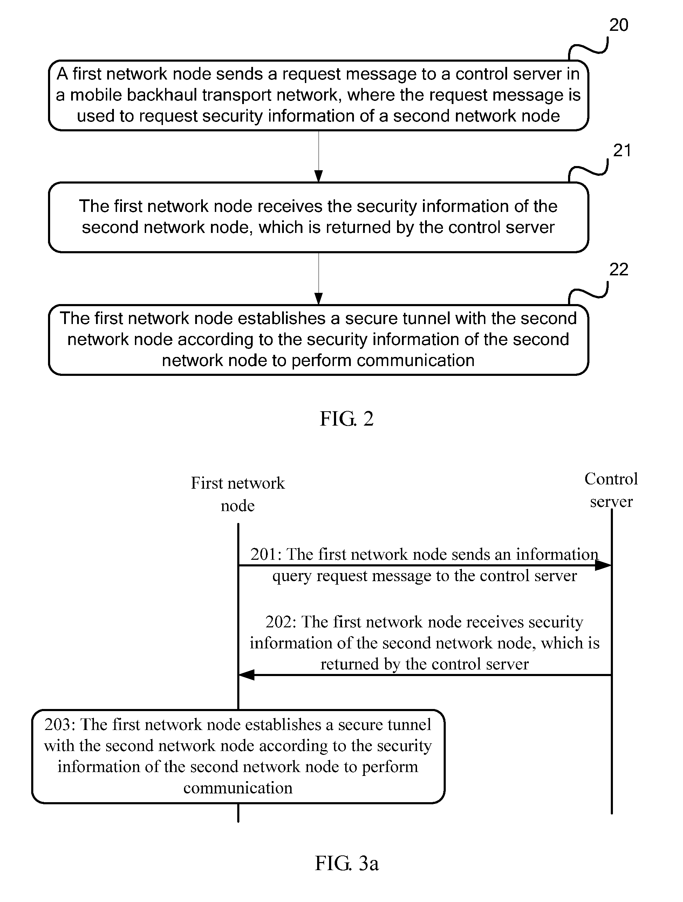

FIG. 2 describes a communications method in a mobile backhaul transport network according to this embodiment from a perspective of a network node in FIG. 1. The network node in FIG. 2 may be an eNB or a core network device. In this embodiment of the present invention, a first network node and a second network node do not indicate a sequential relationship but is intended to distinguish different network nodes.
Step 20: The first network node sends a request message to a control server in the mobile backhaul transport network, where the request message is used to request security information of the second network node in the mobile backhaul transport network.

Optionally, the security information includes but is not limited to at least one or a combination of an IP address, an identifier of a port providing a service, a supported tunnel type, a tunnel authentication manner, and a public key certificate. The first network node may establish a secure tunnel, for example, a virtual private network (Virtual Private Network, VPN for short) tunnel with the second network node according to one type of security information of the second network node or a combination of several types of security information of the second network node.
Step 21: The first network node receives the security information of the second network node, which is returned by the control server.
Step 22: The first network node establishes the secure tunnel with the second network node according to the security information of the second network node to perform communication.

The following describes several specific implementation manners of the communications method in the mobile backhaul transport network in FIG. 2. An example in which the first network node is an eNB1 and the second network node is an MME1 is used as an example. Actually, the first network node and the second network node may be any one of the eNB, the MME1, and the S-GW1 in FIG. 1. A same network node may be used as the first network node during first communication and as the second network node during second communication, which is not limited herein.

Manner 1: A specific process is shown in FIG. 3a.
Step 201: The first network node sends an information query request message to a control server, where the information query request message is used to query security information of the second network node in the mobile backhaul transport network.

The information query request message may carry an identifier of the second network node, such as a device identifier and a domain name. For example, the eNB1 sends an information query request message carrying a device identifier of the MME1 to the control server.
Step 202: The first network node receives the security information of the second network node, which is returned by the control server.

After receiving the information query request message, the control server authenticates the first network node to confirm whether the first network node has permission to communicate with the second network node; and when it is confirmed that the first network node has the permission to communicate with the second network node, searches stored security information of various network nodes for the security information of the second network node and returns the acquired security information of the second network node to the first network node. Optionally, the security information of the second network node, which is stored in the control server, was previously reported by the second network node.

For example, the eNB1 receives an IP address, a supported tunnel type, a tunnel authentication manner, and a public key certificate of the MME1, which are returned by the control server. Security information of the MME1, which is stored in the control server, was previously reported by the MME1 to the control server.
Step 203: The first network node establishes a secure tunnel with the second network node according to the security information of the second network node to perform communication.

For example, the eNB1 establishes a secure channel channel11 with the MME1 according to the IP address, the supported tunnel type, the tunnel authentication manner, and the public key certificate of the MME 1. Subsequently, the eNB1 may communicate with the MME 1 through the channel11 to exchange data.

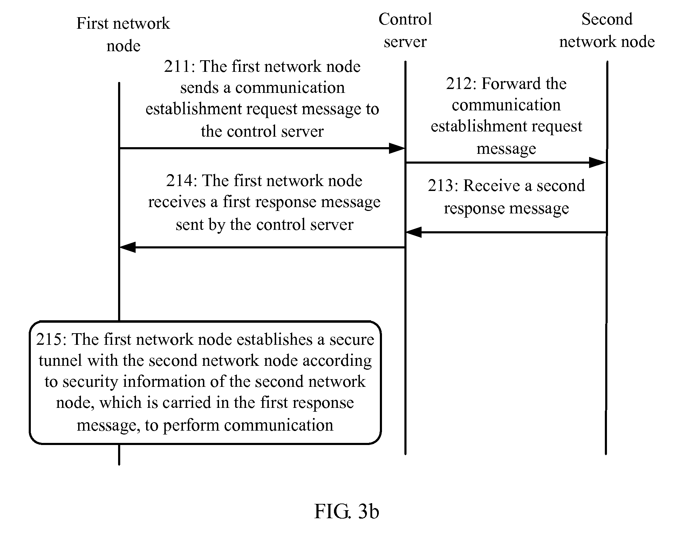

Manner 2: A specific process is shown in FIG. 3b.
Step 211: The first network node sends a communication establishment request message to a control server, where the communication establishment request message is forwarded to the second network node by the first control server.

The communication establishment request message may carry an identifier of the second network node, such as a device identifier and a domain name. For example, the eNB1 sends a communication establishment request message carrying a device identifier of the MME 1 to the control server.
Step 212: After receiving the communication establishment request message, the control server authenticates the first network node to confirm whether the first network node has permission to communicate with the second network node; and when it is confirmed that the first network node has the permission to communicate with the second network node, forwards the communication establishment request message to the second network node. In this embodiment, when receiving the communication establishment request message sent by the eNB1 and confirming that the eNB1 has permission to communicate with the MME1, the control server forwards the communication establishment request message to the MME 1.
Step 213: The control server receives a second response message from the second network node.
Step 214: The first network node receives a first response message sent by the control server, where the first response message is generated by the control server carrying stored security information of the second network node in the second response message after receiving the second response message from the second network node.

The second response message is sent after the second network node receives the communication establishment request message. After receiving the second response message, the control server carries the stored security information of the second network node in the second response message to generate the first response message and sends the first response message to the first network node. It is assumed that a first response message received by the eNB1 carries security information of the MME1.
Step 215: The first network node establishes a secure tunnel with the second network node according to the security information of the second network node, which is carried in the first response message, to perform communication.

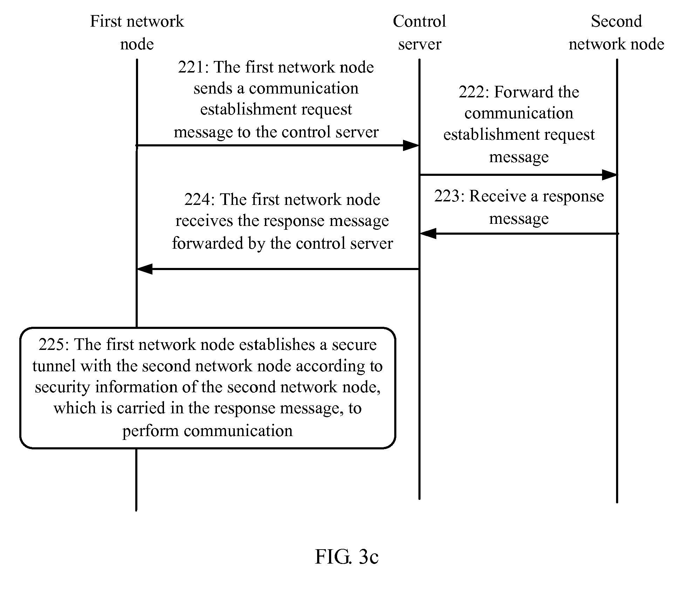

Manner 3: A specific process is shown in FIG. 3c.
Step 221: The first network node sends a communication establishment request message to a control server in the mobile backhaul transport network, where the communication establishment request message is used to request communication with the second network node in the mobile backhaul transport network. For example, when the eNB1 needs to communicate with the MME1, the eNB1 sends a communication establishment request message carrying a device identifier of the MME 1 to the control server.
Step 222: When it is confirmed that the first network node has permission to communicate with the second network node, the control server forwards the communication establishment request message to the second network node.

After receiving the communication establishment request message, the control server authenticates the first network node to confirm whether the first network node has the permission to communicate with the second network node; and when it is confirmed that the first network node has the permission to communicate with the second network node, forwards the communication establishment request message to the second network node. For example, when it is confirmed that the eNB1 has permission to communicate with the MME1, the control server forwards the communication establishment request message to the MME1.
Step 223: The control server receives a response message sent by the second network node and forwards the response message to the first network node. After receiving the communication establishment request message, the second network node returns the response message carrying security information of the second network node to the control server. The response message is forwarded to the first network node by the control server. For example, after receiving the communication establishment request message from the eNB1, the MME1 returns the response message carrying security information of the MME1 to the control server. The response message is forwarded to the eNB 1 by using the control server.
Step 224: The first network node receives the response message that is from the second network node and forwarded by the control server.
Step 225: The first network node establishes a secure tunnel with the second network node according to the security information of the second network node, which is carried in the response message, to perform communication.

Optionally, the method shown in FIG. 2 further includes:
reporting, by the first network node, security information of the first network node to the control server, where the security information is used to enable another network node in the mobile backhaul transport network to establish a secure tunnel with the first network node according to the information. For example, the second network node is enabled to establish, after acquiring the security information, the secure tunnel with the first network node.

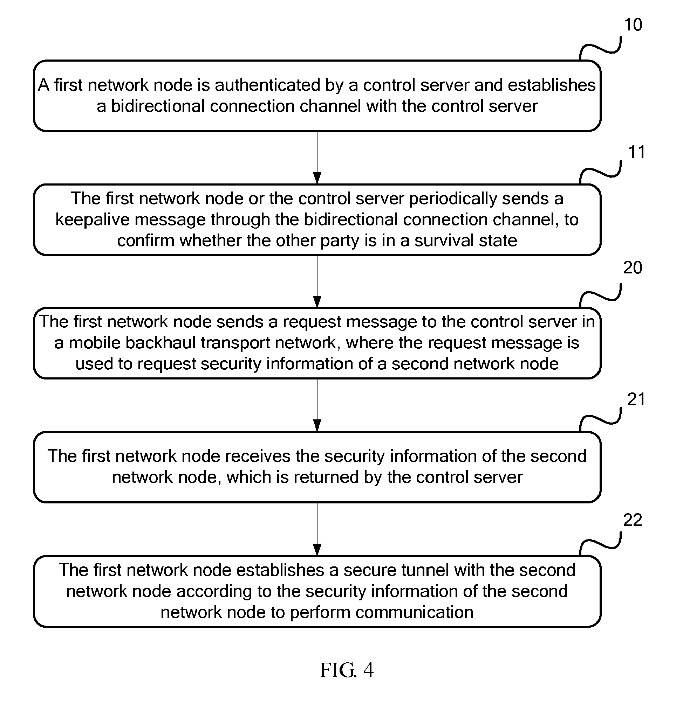

Optionally, reference is made to FIG. 4. Before step 21 in the method shown in FIG. 2, the method further includes:
Step 10: The first network node is authenticated by the control server and establishes a bidirectional connection channel with the control server.

For example, the first network node first logs in to the control server. The control server uses an existing user name+password authentication manner to authenticate the first network node.
Step 11: The first network node or the control server periodically sends a keepalive (KeepAlive) message through the bidirectional connection channel, to confirm whether the other party is in a survival state.

For example, the first network node may periodically send the keepalive message to the control server. If the control server receives the keepalive message within a preset time segment, it is confirmed that the first network node is in the survival state. If the control server does not receive, within a preset time segment, the keepalive message sent by the first network node, it is determined that the first network node is in a failure state.

The first network node may also receive the keepalive message periodically sent by the control server. If the first network node receives the keepalive message within a preset time segment, it is confirmed that the control server is in the survival state. If the first network node does not receive, within a preset time segment, the keepalive message sent by the control server, it is determined that the control server is in a failure state.

Optionally, in the method shown in FIG. 2, after step 22, after communication between the first network node and the second network node ends, the secure tunnel may be removed or retained according to a preconfigured policy, and no special limitation is posed herein.

In the communications method in the mobile backhaul transport network according to this embodiment of the present invention, a control server is added in the mobile backhaul transport network. When needing to communicate with a second network node, a first network node sends a request message to the control server, receives security information of the second network node, which is returned by the control server, and establishes a secure tunnel with the second network node according to the security information of the second network node to perform communication. Further, because two parties of communication establish a secure tunnel by using a control server to perform communication, a malicious user cannot steal S 1 and X2 traffic by means of mirroring traffic or tamper data, thereby implementing secure communication between two network nodes in a mobile backhaul transport network and ensuring security of data transmitted between network nodes.

In this embodiment of the present invention, a control server is added in a mobile backhaul transport network, which enables two network nodes in the mobile backhaul transport network to dynamically establish a secure tunnel as required, thereby providing a flexible and effective solution for secure communication in the mobile backhaul transport network.

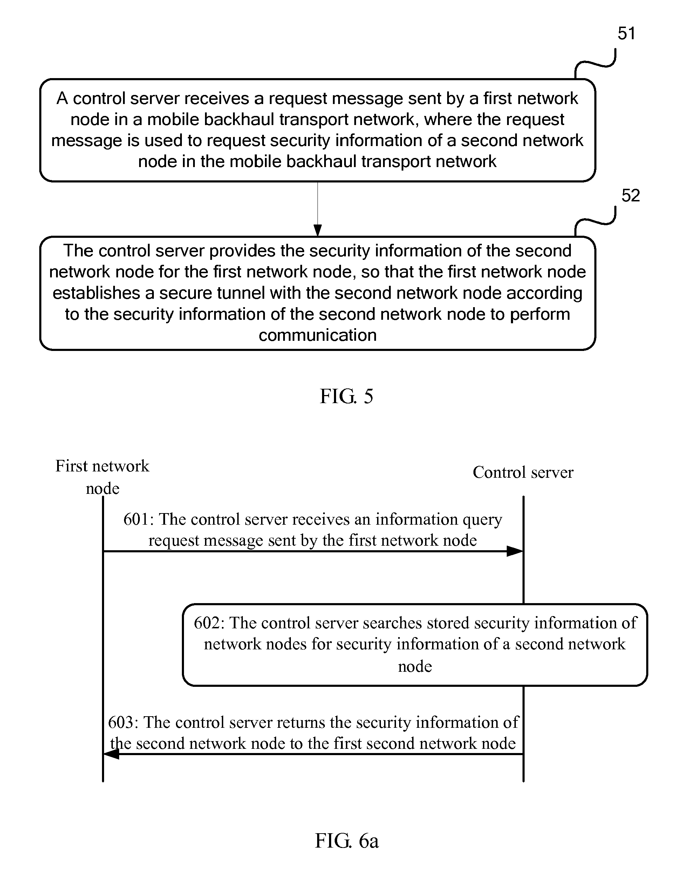

FIG. 5 describes a communications method in a mobile backhaul transport network according to this embodiment of the present invention from a perspective of a control server.
Step 51: The control server receives a request message sent by a first network node in the mobile backhaul transport network, where the request message is used to request security information of a second network node in the mobile backhaul transport network.

The request message may be an information query request message, or may also be a communication establishment request message, which is described in the following in detail with reference to specific implementation manners.
Step 52: The control server provides the security information of the second network node for the first network node, so that the first network node establishes a secure tunnel with the second network node according to the security information of the second network node to perform communication.

The control server may use the following two solutions to provide the security information of the second network node for the first network node: (1) when it is confirmed that the first network node has permission to communicate with the second network node, searching stored security information of network nodes for the security information of the second network node, and returning the security information of the second network node to the first network node; (2) when it is confirmed that the first network node has permission to communicate with the second network node, forwarding the request message to the second network node; receiving, by the control server, the security information of the second network node, which is returned by the second network node; and returning, by the control server, the security information of the second network node to the first network node. During specific implementation, different solutions may be flexibly selected according to performance of the control server or transmission bandwidth of the network.

The following provides several optional specific implementation manners of the communications method in the mobile backhaul transport network shown in FIG. 5.

Manner 1: Reference is made to FIG. 6a.
Step 601: A control server receives an information query request message sent by a first network node, where the information query request message is used to query security information of a second network node.

The information query request message may carry an identifier of the second network node, such as a device identifier and a domain name. For example, the control server receives an information query request message that carries a device identifier of an MME1 and is sent by an eNB1.
Step 602: The control server searches stored security information of network nodes for the security information of the second network node.

After receiving the information query request message, the control server may search the stored security information of the network nodes for the security information of the second network node.

Optionally, the security information of the second network node, which is stored in the control server, was previously reported by the second network node. The security information reported by the second network node is used to enable another node in the mobile backhaul transport network to establish, according to the information, a secure tunnel with the second network node. For example, the first network node is enabled to establish a secure tunnel with the second network node according to the security information of the second network node.
Step 603: The control server returns the security information of the second network node to the first network node, so that the first network node directly establishes the secure tunnel with the second network node according to the security information of the second network node to perform communication.

For example, the control server returns an IP address, a supported tunnel type, a tunnel authentication manner, and a public key certificate of the MME 1 to the eNB1.

Optionally, to enable the control server to perform permission control over each network node, before step 603, the method further includes: confirming, by the control server, whether the first network node has permission to establish a tunnel with the second network node. Specifically, a permission table may be stored and maintained in the control server. The permission table records access permission corresponding to each network node, another network node with which a tunnel may be established, and the like. According to the permission table, the control server may query whether the eNB1 can communicate with the MME1 and execute step 603 only when it is confirmed that the eNB1 can communicate with the MME1. If the eNB1 cannot communicate with the MME1, security information of the MME 1 is not sent to the eNB1.

Alternatively, before step 602, the method further includes: confirming, by the control server, whether the first network node has permission to query security information of another network node. For example, the control server may query whether the eNB1 has permission to query security information of another network node and execute step 602 only when it is confirmed that the eNB 1 has the query permission. If the eNB 1 does not have the query permission, query processing is not performed.

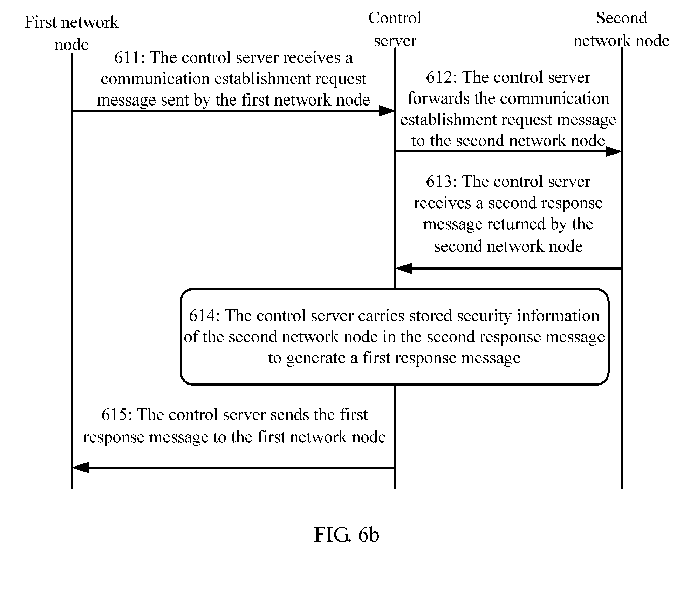

Manner 2: Reference is made to FIG. 6b.
Step 611: A control server receives a communication establishment request message sent by a first network node, where the communication establishment request message is used to request communication with a second network node in the mobile backhaul transport network.

The communication establishment request message may carry an identifier of the second network node, such as a device identifier and a domain name. For example, an eNB1 sends a communication establishment request message carrying a device identifier of an MME 1 to the control server.
Step 612: The control server forwards the communication establishment request message to the second network node.

For example, the control server forwards the communication establishment request message to the MME1.
Step 613: The control server receives a response message returned by the second network node. For ease of differentiation, the response message that is sent by the second network node and received by the control server is called a second response message herein.
Step 614: The control server carries stored security information of the second network node in the second response message to generate a first response message.
Step 615: The control server sends the first response message to the first network node, so that the first network node establishes a secure tunnel with the second network node according to the security information of the second network node, which is carried in the first response message, to perform communication.

For example, the control server carries security information of the MME1, which is stored in the control server, in a response message returned by the MME1 and sends the response message carrying the security information of the MME1 to the eNB1.

Optionally, to enable the control server to perform permission control over each network node, before step 612, the method further includes: confirming, by the control server, whether the first network node has permission to establish a tunnel with the second network node. Specifically, a permission table may be stored and maintained in the control server. The permission table records access permission corresponding to each network node, another network node with which a tunnel may be established, and the like. According to the permission table, the control server may query whether the eNB1 can communicate with the MME1 and execute step 612 only when it is confirmed that the eNB1 can communicate with the MME1.

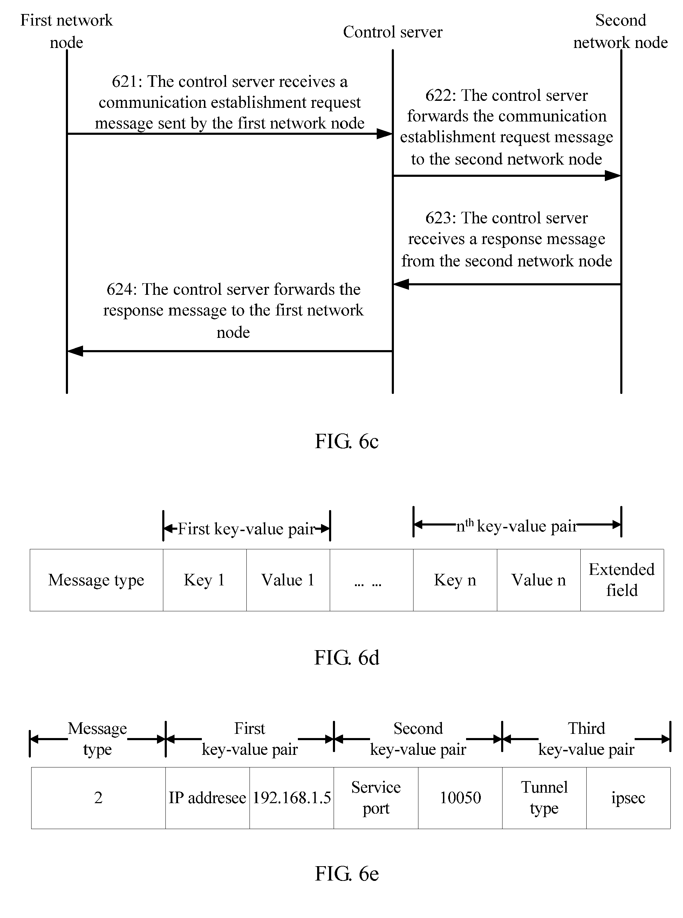

Manner 3: Reference is made to FIG. 6c.
Step 621: A control server receives a communication establishment request message sent by a first network node in the mobile backhaul transport network, where the communication establishment request message is used to request communication with a second network node in the mobile backhaul transport network.
Step 622: When it is confirmed that the first network node has permission to communicate with the second network node, the control server forwards the communication establishment request message to the second network node.
Step 623: The control server receives a response message from the second network node.
Step 624: The control server forwards the response message to the first network node, so that the first network node establishes a secure tunnel with the second network node according to security information of the second network node, which is carried in the response message, to perform communication.

Optionally, this manner may be replaced by the following solution:

In step 621, the communication establishment request message carries security information of the first network node. The security information of the first network node is used to enable another network node in the mobile backhaul transport network to establish a secure tunnel with the first network node when there is a need to communicate with the first network node. For example, after acquiring the security information, the second network node establishes the secure tunnel with the first network node.

In step 622, after the control server forwards the communication establishment request message to the second network node, the second network node establishes the secure tunnel with the first network node according to the security information of the first network node, which is carried in the communication establishment request message, to perform communication.

That is, the first network node may establish the secure tunnel with the second network node according to the security information of the second network node, which is carried in the response message, to perform communication, or the second network node may establish the secure tunnel with the first network node according to the security information of the first network node, which is carried in the communication establishment request message, to perform communication.

FIG. 6d shows a format of a message exchanged between a first network node and a control server in FIG. 3a to FIG. 3c and FIG. 6a to FIG. 6c. In addition to carrying a source IP address, a source port, a destination IP address, and a destination port, this message further needs to carry a message type identifier and at least one key-value (Key-Value) pair. If the message is sent by the first network node to the control server, the source IP address is an IP address of the first network node, the source port is a port of the first network node, the destination IP address is an IP address of the control server, and the destination port is a port of the control server. If the message is sent by the control server to the first network node, the source IP address is an IP address of the control server, the source port is a port of the control server, the destination IP address is an IP address of the first network node, and the destination port is a port of the first network node. Other cases are similar and are not listed herein one by one.

If the message type identifier is 0, it indicates that this message is a request message, such as the information query request message in FIG. 6a or the communication establishment request message in FIG. 6b.

If the message type identifier is 1, it indicates that this message is a forwarded message, such as the message forwarded by the control server in step 612 of FIG. 6b.

If the message type identifier is 2, it indicates that this message is a response message, such as the response message in step 623 of FIG. 6c.

In a case in which the message type identifier is 0 and this message is a request message, an identifier of a second network node may be written into an extended field to query security information of the second network node, or **all** may also be written into an extended field to query the control server for security information of all network nodes in a mobile backhaul transport network.

In a case in which the message type identifier is 2 and this message is a response message, multiple types of security information of a second network node may be carried in multiple different key-value pairs. For example, an IP address value of the second network node is carried in a first key-value pair, a number of a service port of the second network node is carried in a second key-value pair, and a tunnel type of the second network node is carried in a third key-value pair, as shown in FIG. 6e.

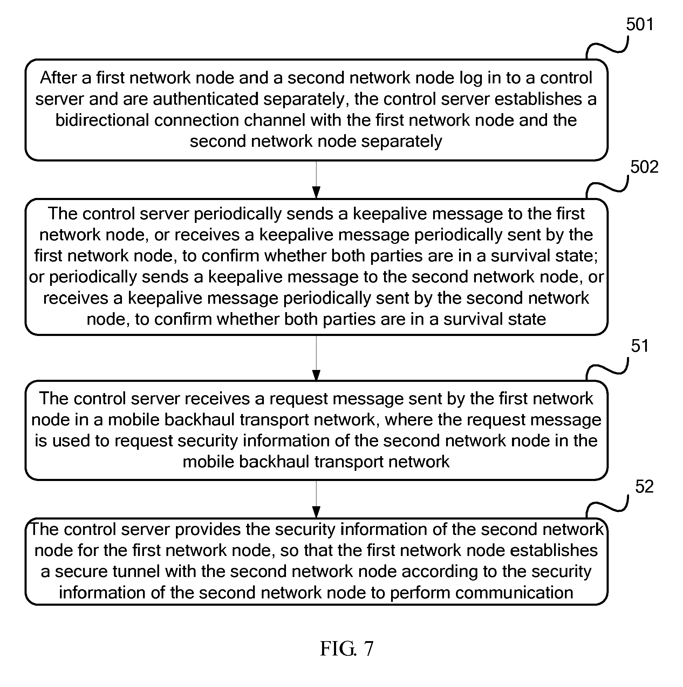

Optionally, reference is made to FIG. 7. Before step 51 in FIG. 5, the method further includes:
Step 501: After the first network node and the second network node are authenticated by the control server separately, the control server establishes a bidirectional connection channel with the first network node and the second network node separately.
Step 502: The control server periodically sends a keepalive message to the first network node, or receives a keepalive message periodically sent by the first network node, to confirm whether both parties are in a survival state; or periodically sends a keepalive message to the second network node, or receives a keepalive message periodically sent by the second network node, to confirm whether both parties are in a survival state.

Specifically, reference may be made to descriptions in step 10 and step 11 of FIG. 4, and details are not described herein again.

In the communications method in the mobile backhaul transport network according to this embodiment of the present invention, when one network node needs to perform secure communication with another network node, a control server in the mobile backhaul transport network receives a request message sent by the one network node and provides security information of the another network for the one network node, thereby enabling the one network node to establish a secure tunnel with the another network node to perform communication. A control server is used to manage security information of each network node in a mobile backhaul transport network, which improves security of communication between two network nodes in the mobile backhaul transport network.

### Embodiment 2

This embodiment provides a network node in a mobile backhaul transport network and a control server in the mobile backhaul transport network. The following describes the network node and the control server in detail with reference to the accompanying drawings.

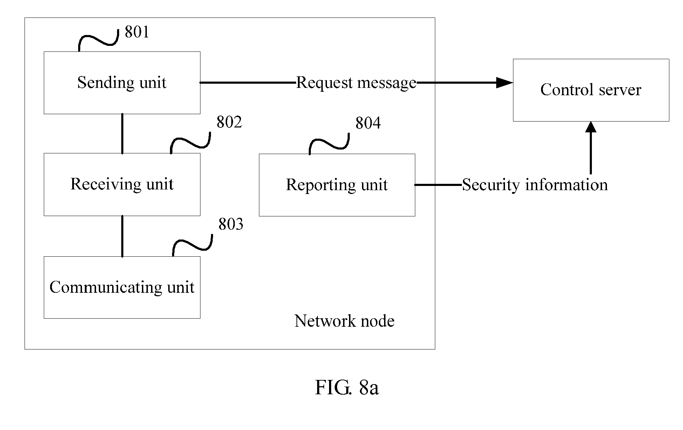

As shown in FIG. 8a, a network node in a mobile backhaul transport network includes a sending unit 801, a receiving unit 802, and a communicating unit 803. Details are as follows:

The sending unit 801 is configured to send a request message to a control server in the mobile backhaul transport network, where the request message is used to request security information of another network node in the mobile backhaul transport network.

The receiving unit 802 is configured to receive the security information of the another network node, which is returned by the control server according to the request message.

The communicating unit 803 is configured to establish a secure tunnel with the another network node according to the security information of the another network node, which is received by the receiving unit 802, to perform communication.

Optionally, the network node further includes: a reporting unit 804, configured to report security information of the network node to the control server, where the security information of the network node is used to enable the another network node to establish, after acquiring the security information, the secure tunnel with the network node.

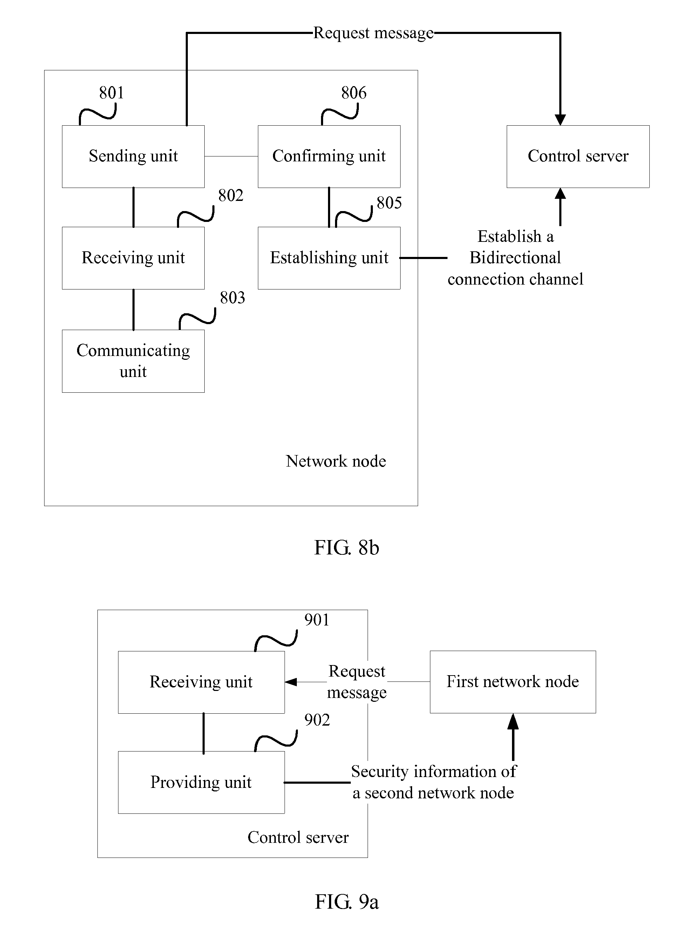

Optionally, reference is made to FIG. 8b. The network node in FIG. 8a further includes:
an establishing unit 805, configured to: after the network node is authenticated by the control server, establish a bidirectional connection channel with the control server; and
a confirming unit 806, configured to receive, through the bidirectional connection channel, a keepalive message periodically sent by the control server, to confirm whether the control server is in a survival state, where
if the confirming unit 806 confirms that the control server is in the survival state, the sending unit 801 sends the request message.

Various units in the network nodes in FIG. 8a and FIG. 8b may be mutually combined to complete functions of each step in FIG. 2 to FIG. 4 of the method embodiment.

FIG. 9a is a schematic structural diagram of a control server in a mobile backhaul transport network according to this embodiment. The control server includes:
a receiving unit 901, configured to receive a request message sent by a first network node in the mobile backhaul transport network, where the request message is used to request security information of a second network node in the mobile backhaul transport network; and
a providing unit 902, configured to provide the security information of the second network node for the first network node according to the request message, so that the first network node establishes a secure tunnel with the second network node according to the security information of the second network node to perform communication.

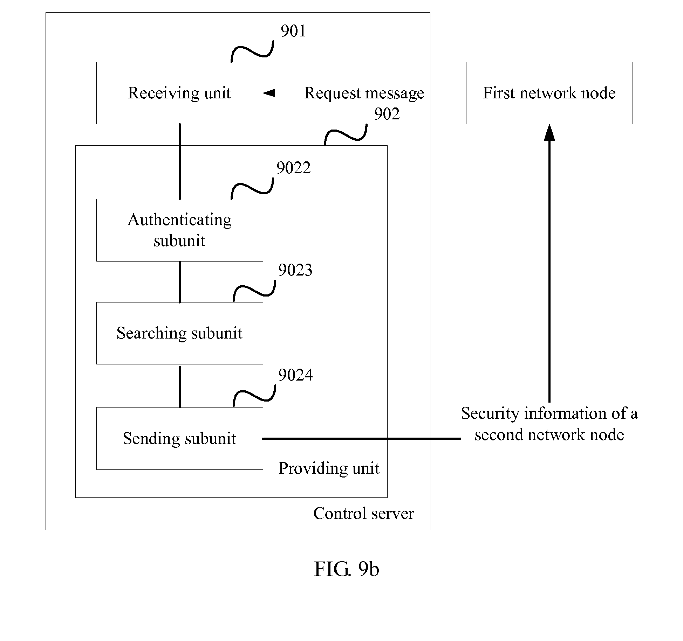

Optionally, reference is made to FIG. 9b. The providing unit 902 includes:
an authenticating subunit 9022, configured to confirm whether the first network node has permission to communicate with the second network node;
a searching subunit 9023, configured to: when the authenticating subunit 9022 confirms that the first network node has the permission to communicate with the second network node, search stored security information of network nodes for the security information of the second network node; and
a sending subunit 9024, configured to return the security information of the second network node, which is acquired by the searching subunit 9023, to the first network node.

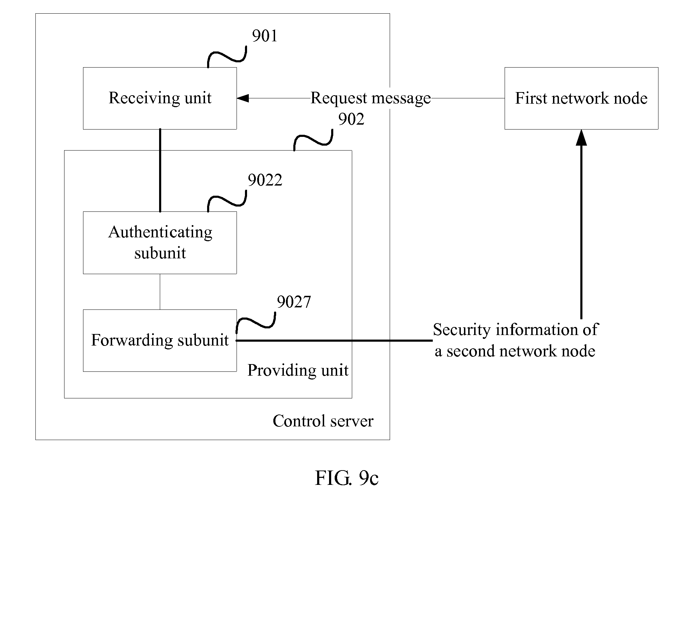

Optionally, reference is made to FIG. 9c. The providing unit 902 includes:
an authenticating subunit 9022, configured to confirm whether the first network node has permission to communicate with the second network node; and
a forwarding subunit 9027, configured to: when the authenticating subunit 9022 confirms that the first network node has the permission to communicate with the second network node, forward the request message to the second network node; and receive the security information of the second network node, which is returned by the second network node, and return the security information of the second network node to the first network node.

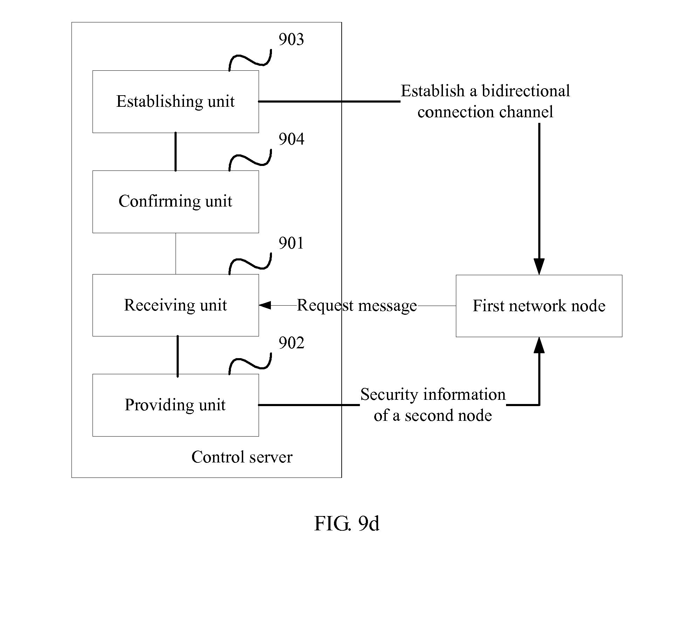

Optionally, reference is made to FIG. 9d. The control server in FIG. 9a to FIG. 9c further includes:
an establishing unit 903, configured to: after the first network node is authenticated, establish a bidirectional connection channel with the first network node; and
a confirming unit 904, configured to send a keepalive message to the first network node through the bidirectional connection channel, to confirm whether the first network node is in a survival state, where
if the confirming unit 904 confirms that the first network node is in the survival state, the providing unit 902 is configured to provide the security information of the second network node for the first network node.

Various units in the control servers in FIG. 9d, FIG. 9b, and FIG. 9c may be mutually combined to complete functions of each step in FIG. 5 to FIG. 7 of the method embodiment, and details are not described herein again.

This embodiment further provides a communications system in a mobile backhaul transport network, including at least two network nodes in FIG. 8a or 8b and at least one control server shown in any one of FIG. 9a to FIG. 9d. FIG. 1 shows a schematic diagram of the communications system.

### Embodiment 3

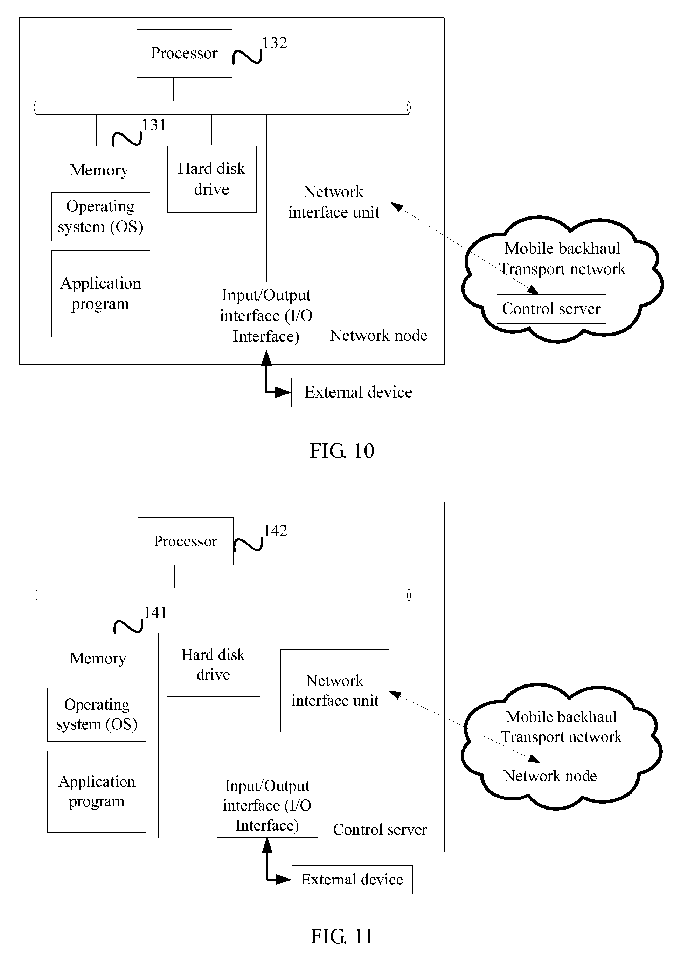

This embodiment provides a network node that is applied to a mobile backhaul transport network. A structure of the network node is shown in FIG. 10. The network node includes a memory 131 and a processor 132, where:
the memory 131 is configured to store code; and
the processor 132 is configured to read the code stored in the memory 131 and execute each step executed by the network node in Embodiment 1.

This embodiment of the present invention provides a control server that is applied to a mobile backhaul transport network. As shown in FIG. 11, the control server includes a memory 141 and a processor 142, where:
the memory 141 is configured to store code; and
the processor 142 is configured to read the code stored in the memory 141 and execute each step executed by the control server in Embodiment 1.

Persons of ordinary skill in the art may understand that the aspects of the present invention or the possible implementation manners of the aspects may be specifically implemented as a system, a method, or a computer program product. Therefore, the aspects of the present invention or the possible implementation manners of the aspects may adopt a form of hardware only embodiments, software only embodiments (including firmware, resident software, and the like), or embodiments in combination of software and hardware, which is herein collectively called a "circuit", a "module", or a "system". In addition, the aspects of the present invention or the possible implementation manners of the aspects may adopt a form of a computer program product that refers to computer readable program code stored in a computer readable medium.

The computer readable medium may be a computer readable signal medium or a computer readable storage medium. The computer readable storage medium includes but is not limited to an electronic, magnetic, optical, electromagnetic, infrared, or semi-conductor system, device, or apparatus, or any proper combination of the foregoing, for example, a random access memory (RAM), a read-only memory (ROM), an erasable programmable read-only memory (EPROM or flash memory), an optical fiber, and a compact read-only memory (CD-ROM).

A processor in a computer reads the computer readable program code stored in the computer readable medium, so that the processor can execute functions and actions specified in each step or a combination of the steps in a flowchart; and generates apparatuses of implementing functions and actions specified in each block or a combination of the blocks in a block diagram.

The computer readable program code may be completely executed on a computer of a user, may be partially executed on a computer of a user, may be implemented as an independent software package, may be partially implemented on a computer of a user and partially implemented on a remote computer, or may be completely executed on a remote computer or a server. It should also be noted that, in some alternative implementation solutions, steps in a flowchart or functions indicated by blocks in a block diagram may not be implemented in an order indicated in the flowchart or block diagram. For example, two steps or blocks that depend on an involved function and are shown in sequence may be actually executed concurrently, or sometimes these blocks may be executed in reverse order.

It is apparent that persons skilled in the art can make various modifications and variations to the present invention without departing from the spirit and scope of the present invention. The present invention is intended to cover these modifications and variations provided that they fall within the scope of protection defined by the following claims and equivalent technologies.

## Claims

1. A communications method in a mobile backhaul transport network, comprising:
sending, by a first network node, a request message to a control server in the mobile backhaul transport network, wherein the request message is used to request security information of a second network node in the mobile backhaul transport network;
receiving, by the first network node, the security information of the second network node, which is returned by the control server; and
establishing, by the first network node, a secure tunnel with the second network node according to the security information of the second network node to perform communication.

2. The communications method according to claim 1, further comprising:
reporting, by the first network node, security information of the first network node to the control server, wherein the security information of the first network node is used to enable the second network node to establish, after acquiring the security information, the secure tunnel with the first network node.

3. The communications method according to claim 1 or 2, wherein before the sending, by a first network node, a request message to a control server in the mobile backhaul transport network, the communications method further comprises:
establishing, by the first network node, a bidirectional connection channel with the control server after the first network node is authenticated by the control server; and
sending, by the first network node, a keepalive message to the control server through the bidirectional connection channel, to confirm whether the control server is in a survival state.

4. The communications method according to any one of claims 1 to 3, wherein the security information of the second network node comprises at least one of the following: an IP address, an identifier of a port providing a service, a supported tunnel type, a tunnel authentication manner, and a public key certificate.

5. The communications method according to any one of claims 1 to 4, wherein:
the first network node comprises at least one of the following:
a base station and a core network device.

6. A communications method in a mobile backhaul transport network, comprising:
receiving, by a control server, a request message sent by a first network node in the mobile backhaul transport network, wherein the request message is used to request security information of a second network node in the mobile backhaul transport network; and
providing, by the control server, the security information of the second network node for the first network node, so that the first network node establishes a secure tunnel with the second network node according to the security information of the second network node to perform communication.

7. The communications method according to claim 6, wherein the providing, by the control server, the security information of the second network node for the first network node comprises:
when it is confirmed that the first network node has permission to communicate with the second network node, searching, by the control server, stored security information of network nodes for the security information of the second network node, and returning the security information of the second network node to the first network node.

8. The communications method according to claim 7, wherein before the searching, by the control server, stored security information of network nodes for the security information of the second network node, the communications method further comprises:
receiving and storing, by the control server, the security information of the second network node, which is reported by the second network node.

9. The communications method according to claim 6, wherein the providing, by the control server, the security information of the second network node for the first network node comprises:
forwarding, by the control server when it is confirmed that the first network node has permission to communicate with the second network node, the request message to the second network node;
receiving, by the control server, the security information of the second network node, which is returned by the second network node; and
returning, by the control server, the security information of the second network node to the first second network node.

10. The communications method according to any one of claims 6 to 9, further comprising:
receiving, by the control server, security information of the first network node, which is reported by the first network node, wherein the security information of the first network node is used to enable the second network node to establish, after acquiring the security information, the secure tunnel with the first network node.

11. The communications method according to any one of claims 6 to 10, wherein before the receiving, by a control server, a request message sent by a first network node in the mobile backhaul transport network, the communications method further comprises:
establishing, after the control server authenticates the first network node, a bidirectional connection channel with the first network node; and
sending, by the control server, a keepalive message to the first network node through the bidirectional connection channel, to confirm whether the first network node is in a survival state.

12. A network node, wherein the network node is applied to a mobile backhaul transport network and comprises:
a sending unit, configured to send a request message to a control server in the mobile backhaul transport network, wherein the request message is used to request security information of another network node in the mobile backhaul transport network;
a receiving unit, configured to receive the security information of the another network node, which is returned by the control server according to the request message; and
a communicating unit, configured to establish a secure tunnel with the another network node according to the security information of the another network node, which is received by the receiving unit, to perform communication.

13. The network node according to claim 12, further comprising:
a reporting unit, configured to report security information of the network node to the control server, wherein the security information of the network node is used to enable the another network node to establish, after acquiring the security information, the secure tunnel with the network node.

14. The network node according to claim 12 or 13, further comprising:
an establishing unit, configured to: after the network node is authenticated by the control server, establish a bidirectional connection channel with the control server; and
a confirming unit, configured to receive, through the bidirectional connection channel, a keepalive message periodically sent by the control server, to confirm whether the control server is in a survival state, wherein
if the confirming unit confirms that the control server is in the survival state, the sending unit sends the request message.

15. A control server, wherein the control server is applied to a mobile backhaul transport network and comprises:
a receiving unit, configured to receive a request message sent by a first network node in the mobile backhaul transport network, wherein the request message is used to request security information of a second network node in the mobile backhaul transport network; and
a providing unit, configured to provide the security information of the second network node for the first network node according to the request message, so that the first network node establishes a secure tunnel with the second network node according to the security information of the second network node to perform communication.

16. The control server according to claim 15, wherein the providing unit comprises:
an authenticating subunit, configured to confirm whether the first network node has permission to communicate with the second network node;
a searching subunit, configured to: when the authenticating subunit confirms that the first network node has the permission to communicate with the second network node, search stored security information of network nodes for the security information of the second network node; and
a sending subunit, configured to return the security information of the second network node, which is acquired by the searching subunit, to the first network node.

17. The control server according to claim 15, wherein the providing unit comprises:
an authenticating subunit, configured to confirm whether the first network node has permission to communicate with the second network node; and
a forwarding subunit, configured to: when the authenticating subunit confirms that the first network node has the permission to communicate with the second network node, forward the request message to the second network node; and receive the security information of the second network node, which is returned by the second network node, and return the security information of the second network node to the first network node.

18. The control server according to any one of claims 15 to 17, further comprising:
an establishing unit, configured to: after the first network node is authenticated, establish a bidirectional connection channel with the first network node; and
a confirming unit, configured to send a keepalive message to the first network node through the bidirectional connection channel, to confirm whether the first network node is in a survival state, wherein
if the confirming unit confirms that the first network node is in the survival state, the providing unit is configured to provide the security information of the second network node for the first network node.

19. A network node, wherein the network node is applied to a mobile backhaul transport network and comprises a memory and a processor, wherein:
the memory is configured to store code; and
the processor is configured to read the code stored in the memory and execute the method according to any one of claims 1 to 5.

20. A control server, wherein the control server is applied to a mobile backhaul transport network and comprises a memory and a processor, wherein:
the memory is configured to store code; and
the processor is configured to read the code stored in the memory and execute the method according to any one of claims 6 to 11.

21. A communications system in a mobile backhaul transport network, comprising:
at least two network nodes according to claim 19 and at least one control server according to claim 20.
